(19)

Europäisches
Patentamt
European
Patent Office
Office européen
des brevets

(11)  **EP 4 779 366 A1**

(12)  **EUROPEAN PATENT APPLICATION**
published in accordance with Art. 153(4) EPC

(43)  Date of publication:
22.07.2026  Bulletin 2026/30

(21)  Application number: 24878786.3

(22)  Date of filing: 23.09.2024

(51)  International Patent Classification (IPC):
*G02B 6/02* (2006.01)

(86)  International application number:
PCT/CN2024/120312

(87)  International publication number:
WO 2025/082138 (24.04.2025 Gazette 2025/17)

(84)  Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30)  Priority:  19.10.2023  CN 202311354752

(71)  Applicant: YANGTZE OPTICAL FIBRE AND
CABLE JOINT STOCK
LIMITED COMPANY
East Lake High-tech Development Zone
Wuhan
Hubei 430073 (CN)

(72)  Inventors:
• LI, Peng
Wuhan, Hubei 430074 (CN)
• ZHANG, Lei
Wuhan, Hubei 430074 (CN)
• LUO, Jie
Wuhan, Hubei 430074 (CN)
• JIANG, Jun
Wuhan, Hubei 430074 (CN)
• XIAO, Shifan
Wuhan, Hubei 430074 (CN)

(74)  Representative: Lorenz Seidler Gossel Part. mbB
Widenmayerstr. 23
80538 München (DE)

(54)  **HOLLOW-CORE MICROSTRUCTURED FIBER WITH SUBTRACTIVE MARKS, AND PREFORM AND DRAWING DETECTION METHOD**

(57)  The present invention discloses a hollow-core microstructured optical fiber with a subtractive marking. The hollow-core microstructured optical fiber includes a cladding hollow-core sleeve and a plurality of anti-resonant microstructured units arranged on and attached to the inner wall of the cladding hollow-core sleeve. The anti-resonant microstructured units are configured to form an air core region with an inscribed circle size thereof. The plurality of anti-resonant microstructure units are rotationally symmetric. One or more subtractive marking units are provided on the outer side of a fiber core, such that an end surface structure of the hollow-core microstructured optical fiber exhibits asymmetry. The subtractive marking unit is a groove or a through hole, and the area of the subtractive marking unit accounts for 0.002% to 2% of that of the cladding hollow-core sleeve. In the hollow-core microstructured optical fiber with the subtractive marking of the present invention, by means of the subtractive marking units, the anti-resonant microstructure units can be marked and identified in fiber drawing detection so as to evaluate the geometric uniformity of the hollow-core microstructured optical fiber, thereby providing reference and guidance for the subsequent production of preforms of the hollow-core microstructured optical fiber, and performing process adjustment and improvement in a timely manner.

Fig. 2

## Description

## Field of the Invention

The present invention belongs to the field of optical communication, and more particularly relates to a hollow-core microstructured optical fiber with a subtractive marking, a preform and a fiber drawing detection method.

## Background of the Invention

Hollow-core microstructured optical fibers have the characteristics of simple structure, hollow-core single-mode light guidance and wide transmission spectrum, and have important applications in the fields of light-filler interaction, non-linear optics, gas detection, gas laser generation, optofluidics, etc. A light guidance by large air-hole fiber core has the characteristics of ultra-low Rayleigh scattering, low non-linear coefficient and tunable dispersion, and can provide a higher laser damaged threshold, allowing potential applications in high-power laser transmission, ultraviolet/mid-infrared light transmission, pulse compression, optical solution transmission, etc. Based on the air core having the characteristics of ultra-low loss, low dispersion, low non-linearity, and propagation speed close to the speed of light, the development of hollow-core optical fiber communication transmission and communication devices may be realized, thereby laying a foundation for the construction and development of the next generation of communication systems with ultra-large capacity, low latency, and high-speed optical.

Even though the hollow-core optical fibers have great advantages in design and application, their transmission loss has been higher than that of traditional silica optical fibers. In recent years, it has been found that a hollow-core microstructured optical fiber with a reasonable structural design based on the principle of anti-resonance can effectively reduce the transmission loss, and has the potential to be used as optical fiber for ultra-long distance communication. Further reduction of attenuation is an important issue in the field of hollow-core microstructured optical fiber manufacturing.

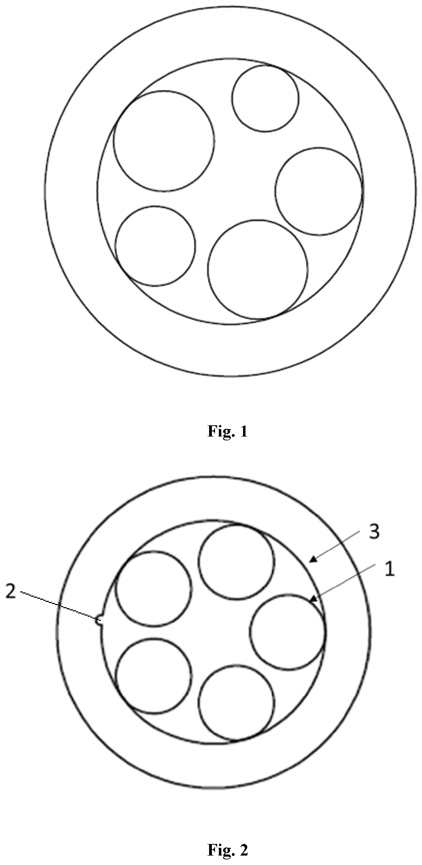

Although the known hollow-core anti-resonant optical fibers, especially those with nested structural elements, can significantly reduce the attenuation of optical fibers, in the manufacturing process of the hollow-core anti-resonant optical fibers, it is essentially different from that of existing solid-core optical fibers. The microscopic three-dimensional structure of hollow-core microstructured optical fibers is the basis for their light conduction. To maintain or form a specific microstructure, it is necessary to maintain gas introduction during the fiber drawing process. Due to the non-uniformity of raw materials, deviations of nested structural elements during the stacking process, and non-uniform thermal field distribution during the fiber drawing process, etc., the obtained hollow-core anti-resonant optical fibers may have anti-resonant structural elements with uneven sizes, as shown in Fig. 1. Such geometric non-uniformity will significantly affect the transmission loss of the hollow-core anti-resonant optical fibers. However, precisely since the manufacturing method is revolutionary compared with that of existing solid-core optical fibers, a common method of increasing the size of an optical fiber preform during solid-core optical fiber manufacturing cannot be used to mitigate the geometric non-uniformity.

## Summary of the Invention

In view of the above defects or improvement demands in the prior art, the present invention provides a hollow-core microstructured optical fiber with a subtractive marking, a preform and a fiber drawing detection method. Subtractive marking units of the hollow-core microstructured optical fiber can mark and identify anti-resonant microstructured units in fiber drawing detection, which has a guiding significance for the production and operation of the hollow-core microstructured optical fiber.

According to one aspect of the present invention, a hollow-core microstructured optical fiber with a subtractive marking is provided. The hollow-core microstructured optical fiber includes a cladding hollow-core sleeve and a plurality of anti-resonant microstructure units arranged on and attached to the inner wall of the cladding hollow-core sleeve. The anti-resonant microstructure units are configured to form an air core region with an inscribed circle size thereof. The plurality of anti-resonant microstructure units are rotationally symmetric.

One or more subtractive marking units are provided on the outer side of a fiber core, such that an end surface structure of the hollow-core microstructured optical fiber exhibits asymmetry.

The distance $D$ between the subtractive marking unit and an optical fiber structural center is such that

$$E_D \leq 0.5\%$$

$$E_D = \int_0^{2\pi} \int_D^R f(r,\theta) r \, dr \, d\theta$$

wherein $E_D$ is an energy distribution ratio of a region on a cross section of the optical fiber where the distance from the optical fiber structural center is greater than $D$; and a point in a polar coordinate system with the optical fiber structural center as a pole within the cross section of the optical fiber has a polar radius of $r$ and a polar angle of $\theta$, and $f(r,\theta)$ is a normalized optical field distribution function of the cross section of the optical fiber; and R is a radius of the optical fiber.

The subtractive marking unit is a groove provided on the inner wall of the cladding hollow-core sleeve, and the groove is axially arranged parallel to the axial direction of the cladding hollow-core sleeve. Alternatively, the subtractive marking unit is a through hole provided in the cladding hollow-core sleeve, and the through hole is axially arranged parallel to the axial direction of the cladding hollow-core sleeve.

On the cross section of the hollow-core microstructured optical fiber, an area enclosed by an outer contour of a single subtractive marking unit accounts for 0.002% to 2% of an area of a cladding.

Preferably, an outer contour of the cladding hollow-core sleeve is circular. The subtractive marking unit is the groove provided on the inner wall of the cladding hollow-core sleeve, and the outer contour of the subtractive marking unit is a part of a rectangle, U-shaped, V-shaped or semicircular. Alternatively, the subtractive marking unit is the through hole provided in the cladding hollow-core sleeve, and the outer contour of the subtractive marking unit is circular, oval, rectangular and/or polygonal.

Preferably, in the hollow-core microstructured optical fiber with the subtractive marking, the distance $D$ between the subtractive marking unit and the optical fiber structural center is such that $E_D \leq 0.1\%$; and the distance $D$ between the subtractive marking unit and the optical fiber structural center satisfies $D \geq d$, wherein $d$ is the fiber core diameter of the hollow-core microstructured optical fiber.

Preferably, in the hollow-core microstructured optical fiber with the subtractive marking, the subtractive marking unit is located within a region between connecting lines of geometric centers of outer contours of anti-resonant microstructure units adjacent thereto and a geometric center of the optical fiber.

Preferably, in the hollow-core microstructured optical fiber with the subtractive marking, the subtractive marking unit is close to one of the adjacent anti-resonant microstructure units.

Preferably, in the hollow-core microstructured optical fiber with the subtractive marking, the subtractive marking unit is the groove provided on the inner wall of the hollow-core sleeve, the radian between a position of the subtractive marking unit and an attachment position of the anti-resonant microstructure unit close thereto is $R_1$, and the radian between attachment positions of the two adjacent anti-resonant microstructure units is $R_2$, wherein $R_1/R_2 = 1/6$ to $1/3$.

Preferably, in the hollow-core microstructured optical fiber with the subtractive marking, the plurality of subtractive marking units are provided on the inner wall of the cladding hollow-core sleeve and have different outer contour shapes, types and/or areas.

According to another aspect of the present invention, a preform of a hollow-core microstructured optical fiber with a subtractive marking is further provided. The preform includes a glass member that is configured to be drawn into the hollow-core microstructured optical fiber with the subtractive marking provided by the present invention.

According to yet another aspect of the present invention, a fiber drawing detection method for a hollow-core microstructured optical fiber with a subtractive marking is further provided. The fiber drawing detection method includes the following steps:

(1) cutting off the hollow-core microstructured optical fiber with the subtractive marking provided by the present invention at a preset position;
(2) performing imaging on an end surface obtained after cutting off in step (1) by using transmission light or reflected light to obtain an end surface image of the hollow-core microstructured optical fiber at the position;
(3) performing, based on a subtractive marking unit on the end surface image, anti-resonant microstructure identification on the end surface image obtained in step (2) to obtain an image of anti-resonant microstructure units; and
(4) performing geometric parameter extraction on the image of the anti-resonant microstructure units obtained through identification in step (3) to evaluate geometric uniformity of the hollow-core microstructured optical fiber.

Preferably, in the fiber drawing detection method for the hollow-core microstructured optical fiber preform, a microscope is used in step (2) for imaging the end surface.

In general, compared with the prior art, the above technical solutions conceived by the present invention can achieve the following beneficial effects.

1) The hollow-core microstructured optical fiber with the subtractive marking of the present invention functions to quickly distinguish the anti-resonant microstructure units in the hollow-core microstructured optical fiber, thereby facilitating on-line control of the size uniformity of the anti-resonant microstructure units, and advantageously reducing the transmission loss of the hollow-core optical fiber.
2) In the hollow-core microstructured optical fiber with the subtractive marking of the present invention, by means of the subtractive marking units, the anti-resonant microstructure units can be marked and identified in fiber drawing detection so as to evaluate and analyze the geometric uniformity of the hollow-core microstructured optical fiber, thereby providing reference and guidance for the subsequent production of preforms of hollow-core microstructured optical fibers, performing process adjustment and improvement in a timely manner to control the geometric uniformity, and thus ensuring the geometric uniformity of the hollow-core microstructured optical fiber during the subsequent manufacturing process of the hollow-core microstructured optical fiber from the preform.
3) During the coupling process of the hollow-core microstructured optical fiber, the different anti-resonant microstructure units are advantageously identified, thereby reducing the coupling loss of the hollow-core microstructured optical fiber.

## Brief Description of the Drawings

Fig. 1 is a schematic diagram of a hollow-core microstructured optical fiber without markings for comparison with Embodiment 1;
Fig. 2 is a schematic structural diagram of a preform of the hollow-core microstructured optical fiber with a groove marking provided by Embodiment 1 of the present invention;
Fig. 3 is a schematic diagram of pressure control during the fiber drawing process of a preform the hollow-core microstructured optical fiber with the groove marking provided by Embodiment 1 of the present invention;
Fig. 4 is a schematic diagram of pressure control during the fiber drawing process of a preform of the hollow-core microstructured optical fiber with a drill hole marking provided by Embodiment 2 of the present invention; and
Fig. 5 is a schematic diagram of pressure control during the fiber drawing process of a preform of the hollow-core microstructured optical fiber with a drill hole marking provided by Embodiment 3 of the present invention.

In all the accompanying fiber drawings, the same reference numerals are used to represent identical elements or structures, wherein,

1 - anti-resonant microstructured unit, 2 - subtractive marking unit, and 3 - cladding hollow-core sleeve.

## Detailed Description of the Embodiments

In order to make the objectives, technical solutions and advantages of the present invention clearer, the present invention will be further described with reference to the embodiments. It should be understood that the specific embodiments described herein are intended only to explain the present invention rather than to limit the present invention. In addition, the technical features involved in various implementations of the present invention described below may be combined with each other as long as they do not constitute a conflict with each other.

According to one aspect of the present invention, a hollow-core microstructured optical fiber with a subtractive marking is provided. The hollow-core microstructured optical fiber includes a cladding hollow-core sleeve 3 and a plurality of anti-resonant microstructure units 1 arranged on and attached to the inner wall of the cladding hollow-core sleeve 3. The anti-resonant micro-

structure units 1 have an air core region internally tangent to the inner wall of the cladding hollow-core sleeve 3. The plurality of anti-resonant microstructure units 1 are rotationally symmetric.

One or more subtractive marking units 2 are provided on the outer side of a fiber core, such that an end surface structure of the hollow-core microstructured optical fiber exhibits asymmetry.

The distance $D$ between the subtractive marking unit 2 and an optical fiber structural center is such that

$$E_D \leq 0.5\%$$

$$E_D = \int_0^{2\pi} \int_D^R f(r,\theta)\,r\,dr\,d\theta$$

where $E_D$ is an energy distribution ratio of a region on a cross section of the optical fiber where the distance from the optical fiber structural center is greater than $D$; and a point in a polar coordinate system with the optical fiber structural center as a pole within the cross section of the optical fiber has a polar radius of $r$ and a polar angle of $\theta$, and $f(r,\theta)$ is a normalized optical field distribution function of the cross section of the optical fiber; and R is a radius of the optical fiber.

As a preferred solution, $E_D \leq 0.1\%$.

The subtractive marking unit 2 is a groove provided on the inner wall of the cladding hollow-core sleeve 3, and the groove is axially arranged parallel to the axial direction of the cladding hollow-core sleeve 3. Alternatively, the subtractive marking unit is a through hole provided in the cladding hollow-core sleeve 3, and the through hole is axially arranged parallel to the axial direction of the cladding hollow-core sleeve 3.

On the cross section of the hollow-core microstructured optical fiber, an area of the subtractive marking unit 2 accounts for 0.002% to 2% of an area of a cladding. The cladding includes an outer cladding formed by the hollow-core sleeve and an anti-resonant cladding formed by the anti-resonant microstructure units.

Preferably, the outer contour of the cladding hollow-core sleeve 3 is circular. The subtractive marking unit 2 is the groove provided on the inner wall of the cladding hollow-core sleeve 3, and the outer contour of the subtractive marking unit 2 is a part of a rectangle, U-shaped, V-shaped or semicircular. Alternatively, the subtractive marking unit 2 is the through hole provided in the cladding hollow-core sleeve 3, and the outer contour of the subtractive marking unit 2 is circular, oval, rectangular and/or polygonal.

Preferably, the distance $D$ between the subtractive marking unit 2 and the optical fiber structural center satisfies $D \geq d$, wherein $d$ is the fiber core diameter of the hollow-core microstructured optical fiber.

Preferably, the subtractive marking unit 2 is located within a region between connecting lines of geometric centers of anti-resonant microstructure units 1 adjacent thereto and a geometric center of the optical fiber, and the region is generally fan-shaped. The subtractive marking unit 2 is close to one of the adjacent anti-resonant microstructure units 1 and lies within the region, such that an end surface of the optical fiber presents asymmetry, thereby obtaining an end surface image of the optical fiber exhibiting asymmetry.

Preferably, the subtractive marking unit 2 is the groove provided on the inner wall of the hollow-core sleeve 3, the radian between a position of the subtractive marking unit 2 and an attachment position of the anti-resonant microstructure unit 1 close thereto is $R_1$, and the radian between attachment positions of the two adjacent anti-resonant microstructure units 1 is $R_2$, wherein $R_1/R_2$ = 1/6 to 1/3.

Preferably, the plurality of subtractive marking units 1 are provided on the inner wall of the cladding hollow-core sleeve and have different outer contour shapes, types and/or areas.

According to another aspect of the present invention, a preform of a hollow-core microstructured optical fiber with a subtractive marking is provided. The preform includes a glass member that is configured to be drawn into the hollow-core microstructured optical fiber with the subtractive marking provided by the present invention.

At present, there is no mature and feasible technical solution for the geometric uniformity detection of anti-resonant microstructured optical fibers. It is conceived by the present invention that an image method is used for end surface detection, and extracting geometric feature to solve the problem of geometric uniformity detection. The difficulty of detection by the image method lies in that the end surface of an anti-resonant microstructured optical fiber theoretically exhibits perfect symmetry, making mutual distinguishing difficult. At present, there are already some anti-resonant microstructured optical fibers with asymmetric end surfaces. For example, in CN115185034A, one capillary tube is internally provided with a circular nested structure, while the remaining capillary tubes are each internally provided with a U-shaped nested structure, thereby forming a single-polarization hollow-core anti-resonant optical fiber that features single-mode performance, low loss, and a simple structure, which is suitable for long-distance scenarios and easy to fabricate. Proposed in Patent CN113885120A is a hollow-core microstructured optical fiber with a two-outer cladding structure. A first outer cladding defines the outer surface of an internal unclosed cladding. A second outer cladding is unclosed and is provided with a micro-channel running through the optical fiber. The second outer cladding is tightly connected to the first outer cladding and defines the inner surface of the internal unclosed cladding. A capillary tube layer as an anti-resonant layer is attached to the inner surface of the second outer cladding and defines, together with the second outer cladding, a fiber core with an effective radius. Capillary tubes in the capillary tube layer are spaced apart, and there is a gap between the adjacent capillary tubes. The first outer cladding can effectively ensure the mechanical reliability of the optical fiber, the second outer cladding has an unclosed structure, thereby greatly reducing the post-processing complexity of the optical fiber and improving the performance of the optical fiber, and thus solving the problems of loss characteristic and processing complexity of existing anti-resonant hollow-core microstructured optical fibers.

Although the above patents propose an asymmetric structural design of the hollow-core microstructured optical fiber, they mainly aim to solve the problem of polarization and the problem of post-processing of the hollow-core optical fiber in optical fiber sensing, and neither of them proposes a solution for controlling the geometric uniformity during the fiber drawing process of the hollow-core microstructured optical fiber. Therefore, no consideration is given to the imaging difficulty of the end surface of the optical fiber, nor to whether asymmetry is sufficiently obvious to distinguish the anti-resonant microstructure units on an end surface image.

Based on the consideration of asymmetric marking, a problem that needs to be solved is whether asymmetric marking affects the performance of the hollow-core microstructured optical fiber and the difficulty of fiber drawing. Specifically, a sufficiently obvious subtractive marking requires a sufficiently large area, which makes it more likely to affect the transmission performance of the microstructured optical fiber and the fiber drawing fabrication difficulty.

Through an ingenious design, the subtractive marking unit is provided within a region on the outer side of the fiber core where the energy distribution of the optical fiber is less than 0.5%, and preferably, within a region on the outer side of the fiber core where the energy distribution of the optical fiber is less than 0.1%, so as to minimize the impact on the transmission performance of the hollow-core microstructured optical fiber.

The subtractive marking unit cannot be provided on the outer surface of the circular sleeve, as the outer surface of the sleeve has a relatively obvious fiber drawing tension. An imperfect cladding may lead to overall deformation of the optical fiber during the fiber drawing process, an increase in transmission loss, as well as deformation of the outer contour of the subtractive marking, making it difficult to identify and meaningless.

If the subtractive marking is a closed marking, i.e., a through hole provided in the cladding hollow-core sleeve, it hardly affects the fiber drawing process of the anti-resonant microstructure units, and thus hardly impacts the transmission performance of the optical fiber. From this perspective, using a through hole as the subtractive marking unit provides theoretically better transmission performance than using a groove as the subtractive marking unit. However, additional airflow needs to be introduced during fiber drawing to maintain the outer contour and prevent collapse, and the processing of the through hole is relatively complex.

If the subtractive marking is an open marking, i.e., a groove, the subtractive marking needs to be provided on the inner wall of the cladding hollow-core sleeve. Additionally, the groove may affect the airflow introduced into the sleeve during fiber drawing to a certain extent, and the outer contour of the groove is also affected by the airflow introduced into the sleeve during fiber drawing and the fiber drawing tension. Therefore, the cross-sectional area and position of the groove have a crucial influence on the identifiability of the subtractive marking unit in the hollow-core optical fiber finally obtained by fiber drawing. Considering an area parameter of the groove, the area enclosed by the outer contour of the subtractive marking unit accounts for 0.002% to 2% of the area of the cladding. Within the range, the subtractive marking unit generally has good identifiability and from the selected position, is easily identifiable as being close to one of the anti-resonant microstructure units, thereby exhibiting more obvious asymmetry. If the area of the groove is excessively large, deformation will be more severe under the influence of the fiber drawing tension. Meanwhile, the groove is provided on the inner wall, and the positional difference between the groove and the two adjacent anti-resonant microstructure units is relatively unobvious, resulting in difficulties in identifying the anti-resonant microstructure units by the end-surface image method.

As a preferred solution, the subtractive marking unit is the groove provided on the inner wall of the hollow-core sleeve, the radian between the position of the subtractive marking unit and the attachment position of the anti-resonant microstructure unit close thereto is $R_1$, and the radian between the attachment positions of the two adjacent anti-resonant microstructure units is $R_2$, wherein $R_1/R_2 = 1/6$ to $1/3$.

According to yet another aspect of the present invention, a fiber drawing detection method for a preform of the hollow-core microstructured optical fiber is further provided. The fiber drawing detection method includes the following steps:

> (1) cutting off the hollow-core microstructured optical fiber with the subtractive marking at a preset position;
> (2) performing imaging on the end surface obtained after cutting off in step (1) by using transmission light or reflected light to obtain an end surface image of the hollow-core microstructured optical fiber at the position;
> (3) performing, based on a subtractive marking unit 2 on the end surface image, anti-resonant microstructure identification on the end surface image obtained in step (2) to obtain an image of anti-resonant microstructure units 1; and
> (4) performing geometric parameter extraction on the image of the anti-resonant microstructure units obtained through identification in step (3) to evaluate geometric uniformity of the hollow-core microstructured optical fiber.

Preferably, a microscope is used in step (2) for imaging the end surface.

The above method can quickly distinguish the anti-resonant microstructure units 1 in the hollow-core microstructured optical fiber, thereby facilitating on-line control of the size uniformity of the anti-resonant microstructure units 1, and advantageously reducing the transmission loss of the hollow-core optical fiber. Moreover, during the coupling process of the hollow-core microstructured optical fiber, the different anti-resonant microstructure units 1 are advantageously identified, thereby reducing the coupling loss of the hollow-core microstructured optical fiber.

A typical preform of the hollow-core microstructured optical fiber with a subtractive marking, as shown in Fig. 2, includes anti-resonant microstructure units 1, and a cladding hollow-core sleeve 3 with a subtractive marking unit 2 in the form of a groove or a through hole formed by drilling. The hollow-core micro-structure optical fiber preform is provided with n anti-resonant microstructure units 1, wherein n ≥ 3. The cladding hollow-core sleeve 3 is provided with m grooves or drill hole markings, wherein m ≥ 1.

Further, the anti-resonant microstructure unit 1 is composed of single-layer or multiple-layer components of a negative-curvature structure.

Further, the drill hole marking has a closed shape, e.g., circular, oval, and square, etc. The groove marking has a non-closed shape, e.g., non-closed semicircular and square, etc.

A fabrication method for the above hollow-core microstructured optical fiber with the groove or drilling hole marking is including the following steps:

> Step 1, fabricate the anti-resonant microstructure units 1. Specifically, a mother tube is drawn into a required capillary tube in a high-temperature fiber-drawing furnace; and the capillary tube may be subjected to secondary processing according to design requirements, such as cutting, polishing, and splicing.
> Step 2, fabricate the cladding hollow-core sleeve 3 with a groove or drill hole marking. Specifically, one or more grooves or drill hole markings are fabricated on the cladding hollow-core sleeve 3 through processes such as drilling, polishing, etching, and cutting.
> Step 3, perform assembly to form a preform. Specifically, the anti-resonant microstructure units 1 obtained in step 1 are stacked and assembled in the cladding hollow-core sleeve 3 with the groove or drill hole marking obtained in step 2 to form a preform of the hollow-core microstructure optical fiber with the groove or drill hole marking.
> Step 4, the preform of the hollow-core microstructured optical fiber with the groove or drill hole marking in step 3 is directly drawn into the hollow-core microstructured optical fiber, or is first drawn into an intermediate preform and then sleeved into an intermediate sleeve to be drawn into the hollow-core microstructured optical fiber. During the fiber drawing process, by means of the groove or drill hole marking, the corresponding relationship between the anti-resonant microstructure units 1 in the optical fiber and the anti-resonant microstructure units 1 in the preform can be quickly distinguished, such that the size of the anti-resonant microstructure units 1 in the optical fiber is adjusted by controlling the magnitude of the gas pressure in the anti-resonant microstructure units 1 of the preform.

Further, the anti-resonant microstructure units 1, and the cladding hollow-core sleeve 3 with the subtractive marking unit 2 in the form of a groove or a drill hole may be made of a high-purity silicon dioxide material, a silica-doped material (which is doped with one or more elements such as germanium, fluorine, chlorine, boron, and aluminum), a multi-component glass material, a plastic material, etc.
Further, the hollow-core microstructured optical fiber has a cladding diameter greater than or equal to 100 μm.
Further, the hollow-core micro-structure optical fiber fabricated by the method of the present invention possesses a relatively low transmission loss, with a minimum of ≤ 30 dB/km, preferably ≤ 1 dB/km.
Further, the hollow-core micro-structure optical fiber fabricated by the method of the present invention possesses a relatively low fusion splicing loss, with a self-fusion splicing loss of ≤ 0.5 dB.
The embodiments are as follows.

Embodiment 1

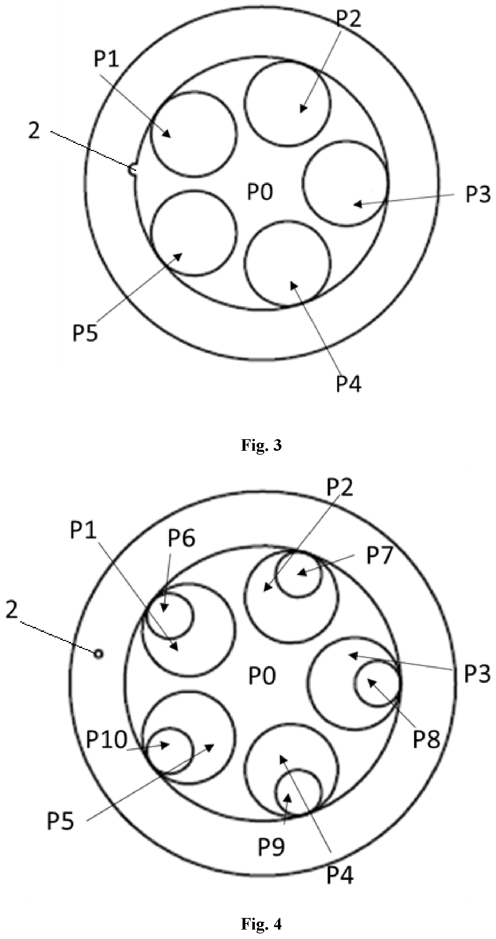

As shown in Fig. 2, a mother tube is first fabricated into capillary tubes. The mother tube is drawn into the capillary tubes in a fiber-drawing furnace to form anti-resonant microstructured units 1, which have an outer diameter of 10.3 mm and a wall thickness of 0.56 mm. Then, one groove is fabricated on the inner wall of the cladding hollow-core sleeve 3 through etching and polishing processes to serve as a subtractive marking unit 2. The cladding hollow-core sleeve 3 has an outer diameter of 50 mm and an inner diameter of 35 mm. The subtractive marking unit 2 in the form of the groove is semicircular and has a diameter of 3.0 mm. The five capillary tubes are stacked in the cladding hollow-core sleeve 3 with the subtractive marking unit 2 to form a preform of the hollow-core microstructured optical fiber with a groove marking as shown in Fig. 1. The hollow-core microstructured optical fiber preform with the groove marking may be directly drawn into a hollow-core microstructured optical fiber in the fiber-drawing furnace. During fiber drawing, due to temperature fluctuations, if no pressure is applied, it may lead to inconsistent sizes of the anti-resonant microstructure units 1. As shown in Fig. 1, the maximum deviation of the outer diameter of the anti-resonant microstructure units 1 is 25%. Accordingly, it is necessary to introduce gases at different pressures into the anti-resonant microstructure units 1 to render the sizes thereof consistent. As shown in Fig. 3, magnitudes of gas pressures required for the anti-resonant microstructure units 1 are identified by means of the subtractive marking unit in the form of a groove. P0 is a normal pressure, and P1, P2, P3, P4 and P5 are respectively the magnitudes of the gas pressures in the anti-resonant microstructure units 1, with values of 10.3 mbar, 10.6 mbar, 11.1 mbar, 10.4 mbar, and 10.7 mbar, respectively. After the optical fiber is formed by fiber drawing, the maximum deviation of the outer diameter of the anti-resonant microstructure units 1 is 4.1%, and the attenuation at 1550 nm is 5.1 dB/km. During fusion splicing of the hollow-core microstructured optical fiber, the orientation of the capillary tubes can be distinguished by means of the subtractive marking unit in the form of a groove, thereby achieving more precise alignment, with a minimum fusion splicing loss of 0.48 dB.

Embodiment 2

As shown in Fig. 4, a mother tube is first fabricated into two sizes of capillary tubes, with large capillary tubes having an outer diameter of 7.9 mm and a wall thickness of 0.42 mm, and small capillary tubes having an outer diameter of 4.5 mm and a wall thickness of 0.44 mm. Then, one drill hole marking 4 is fabricated on the inner wall of the cladding hollow-core sleeve 3 through a drilling process. The cladding hollow-core sleeve 3 has an outer diameter of 45 mm and an inner diameter of 30 mm. The subtractive marking unit 2 formed by drilling is a circular through hole and has a diameter of 2.5 mm. The large capillary tube and the small capillary tube are assembled into the anti-resonant microstructure unit 1 in a spliced manner. The five anti-resonant microstructure units 1 are stacked in the cladding hollow-core sleeve 3 with the subtractive marking unit 4 to form a hollow-core microstructured optical fiber preform with a subtractive marking as shown in Fig. 4. The hollow-core microstructured optical fiber preform with the subtractive marking may be first drawn into an intermediate preform in a fiber-drawing furnace, with the intermediate preform having an outer diameter of 10 mm, and then sleeved into an intermediate sleeve having an outer diameter of 18 mm and an inner diameter of 10.5 mm for fiber drawing. Like the previous embodiment, gases at different pressures are introduced into the anti-resonant microstructure units 1 to render the sizes thereof consistent. P0 is a normal pressure, P1, P2, P3, P4 and P5 are respectively magnitudes of gas pressures in the large capillary tubes of the anti-resonant microstructure units 1, with values of 22.1 mbar, 22.2 mbar, 22.1 mbar, 22.4 mbar, and 22.5 mbar, respectively. P6, P7, P8, P9 and P10 are respectively magnitudes of gas pressures in the small capillary tubes of the anti-resonant microstructure units, with values of 93.1 mbar, 93.2 mbar, 93.2 mbar, 93.7 mbar, and 93.7 mbar, respectively. In the hollow-core microstructured optical fiber formed by fiber drawing, the maximum deviation of the outer diameter of the large capillary tubes in the anti-resonant microstructure units 1 is 3.3%, the maximum deviation of the outer diameter of the small capillary tubes in the anti-resonant microstructure units 1 is 4.2%, and the attenuation at 1550 nm is 0.42 dB/km. During fusion splicing of the hollow-core microstructured optical fiber, the orientation of the capillary tubes can be distinguished by means of the subtractive marking unit in the form of a drill hole, thereby achieving more precise alignment through the rotation function of a fusion splicer, with a minimum fusion splicing loss of 0.36 dB.

Embodiment 3

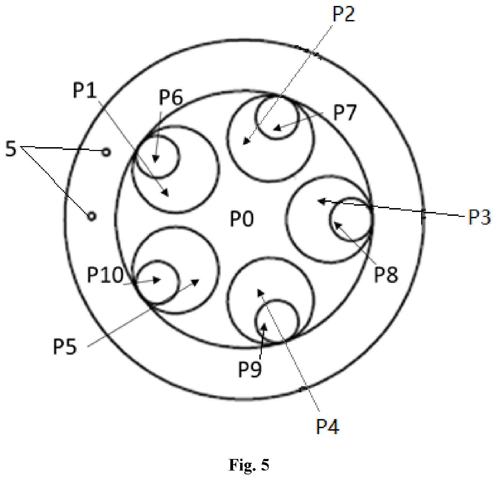

As shown in Fig. 5, a mother tube is first fabricated into two sizes of capillary tubes, with large capillary tubes having an outer diameter of 12.4 mm and a wall thickness of 0.65 mm, and small capillary tubes having an outer diameter of 7.2 mm and a wall thickness of 0.55 mm. Then, two through holes are fabricated on the inner wall of the cladding hollow-core sleeve 3 through a drilling process to serve as two subtractive marking units 2. The cladding hollow-core sleeve 3 has an outer diameter of 66 mm and an inner diameter of 40 mm. The subtractive marking unit 2 in the form of a drill hole is a circular through hole and has a diameter of 3.0 mm. The large capillary tube and the small capillary tube are assembled into the anti-resonant microstructure unit 1 in a spliced manner. The five anti-resonant microstructure units 1 are stacked in the cladding hollow-core sleeve 3 to form a preform of the hollow-core microstructured optical fiber with subtractive markings as shown in Fig. 5. The hollow-core microstructured optical fiber preform with the subtractive marking units 2 may be first drawn into an intermediate preform in a fiber-drawing furnace, with the intermediate preform having an outer diameter of 12.8 mm, and then sleeved into an intermediate sleeve having an outer diameter of 20 mm and an inner diameter of 13.5 mm for fiber drawing. Like the previous embodiment, gases at different pressures are introduced into the anti-resonant microstructure units 1 to render the sizes thereof consistent. P0 is a normal pressure, P1, P2, P3, P4 and P5 are respectively magnitudes of gas pressures in the large capillary tubes of the anti-resonant microstructure units 1, with values of 25.2 mbar, 25.2 mbar, 25.5 mbar, 25.8 mbar, and 25.5 mbar, respectively. P6, P7, P8, P9 and P10 are respectively magnitudes of gas pressures in the small capillary tubes of the anti-resonant microstructure units 1, with values of 66.5 mbar, 66.6 mbar, 66.8 mbar, 66.8 mbar, and 66.4 mbar, respectively. In the hollow-core microstructured optical fiber formed by fiber drawing, the maximum deviation of the outer diameter of the large capillary tubes in the anti-resonant microstructure units 1 is 2.5%, the maximum deviation of the outer diameter of the small capillary tubes in the anti-resonant microstructure units 1 is 2.7%, and the attenuation at 1550 nm is 0.33 dB/km. During fusion splicing of the hollow-core microstructured optical fiber, the orientation of the capillary tubes can be distinguished by means of the subtractive marking unit in the form of a drill hole, thereby achieving more precise alignment through the rotation function of a fusion splicer, with a minimum fusion splicing loss of 0.32 dB.

It will be readily understood by a person skilled in the art that foregoing descriptions are merely preferred embodiments of the present invention, but are not intended to limit the present invention. Any modifications, equivalent replacements, improvements, etc. made within the spirit and principle of the present invention shall fall within the protection scope of the present invention.

## Claims

1. A hollow-core microstructured optical fiber with a subtractive marking, comprising a cladding hollow-core sleeve and a plurality of anti-resonant microstructure units arranged on and attached to an inner wall of the cladding hollow-core sleeve, wherein the anti-resonant microstructure units are configured to form an air core region with an inscribed circle size thereof; the plurality of anti-resonant microstructure units are rotationally symmetric;

   one or more subtractive marking units are provided on an outer side of a fiber core, such that an end surface structure of the hollow-core microstructured optical fiber exhibits asymmetry; a distance D between the subtractive marking unit and an optical fiber structural center is such that

   $$E_D \leq 0.5\%$$

   $$E_D = \int_0^{2\pi} \int_D^R f(r,\theta) r \, dr \, d\theta$$

   wherein $E_D$ is an energy distribution ratio of a region on a cross section of the optical fiber where the distance from the optical fiber structural center is greater than $D$; and a point in a polar coordinate system with the optical fiber structural center as a pole within the cross section of the optical fiber has a polar radius of $r$ and a polar angle of $\theta$, and $f(r,\theta)$ is a normalized optical field distribution function of the cross section of the optical fiber; and R is a radius of the optical fiber;
   wherein the subtractive marking unit is a groove provided on the inner wall of the cladding hollow-core sleeve, and the groove is axially arranged parallel to the axial direction of the cladding hollow-core sleeve; alternatively, the subtractive marking unit is a through hole provided in the cladding hollow-core sleeve, and the through hole is axially arranged parallel to the axial direction of the cladding hollow-core sleeve; and on the cross section of the hollow-core microstructured optical fiber, an area enclosed by an outer contour of a single subtractive marking unit accounts for 0.002% to 2% of an area of a cladding.

2. The hollow-core microstructured optical fiber with the subtractive marking according to claim 1, wherein an outer contour of the cladding hollow-core sleeve is circular; the subtractive marking unit is the groove provided on the inner wall of the cladding hollow-core sleeve, and an outer contour of the subtractive marking unit is a part of a rectangle, U-shaped, V-shaped or semicircular; alternatively, the subtractive marking unit is the through hole provided in the cladding hollow-core sleeve, and the outer contour of the subtractive marking unit is circular, oval, rectangular and/or polygonal.

3. The hollow-core microstructured optical fiber with the subtractive marking according to claim 1 or 2, wherein the distance $D$ between the subtractive marking unit and the optical fiber structural center is, such that $E_D \leq 0.1\%$; and the distance $D$ between the subtractive marking unit and the optical fiber structural center satisfies $D \geq d$, wherein $d$ is the fiber core diameter of the hollow-core microstructured optical fiber.

4. The hollow-core microstructured optical fiber with the subtractive marking according to claim 3, wherein the subtractive marking unit is located within a region between connecting lines of geometric centers of outer contours of anti-resonant microstructured units adjacent thereto and a geometric center of the optical fiber.

5. The hollow-core microstructured optical fiber with the subtractive marking according to claim 4, wherein the subtractive marking unit is close to one of the adjacent anti-resonant microstructure units.

6. The hollow-core microstructured optical fiber with the subtractive marking according to claim 5, wherein the subtractive marking unit is the groove provided on the inner wall of the hollow-core sleeve, a radian between a position of the subtractive marking unit and an attachment position of the anti-resonant microstructure unit close thereto is $R_1$, and a radian between attachment positions of the two adjacent anti-resonant microstructure units is $R_2$, wherein

$R_1/R_2$ = 1/6 to 1/3.

7. The hollow-core microstructured optical fiber with the subtractive marking according to claim 1, wherein the plurality of subtractive marking units are provided on the inner wall of the cladding hollow-core sleeve and have different outer contour shapes, types and/or areas.

8. A preform of a hollow-core microstructured optical fiber with a subtractive marking, comprising:

a glass member that is configured to be drawn into the hollow-core microstructured optical fiber with the subtractive marking according to any one of claims 1 to 7.

9. A fiber drawing detection method for a hollow-core microstructured optical fiber with a subtractive marking, comprising the following steps:

(1) cutting off the hollow-core microstructured optical fiber with the subtractive marking according to any one of claims 1 to 7 at a preset position;
(2) performing imaging on an end surface obtained after cutting off in step (1) by using transmission light or reflected light to obtain an end surface image of the hollow-core microstructured optical fiber at the position;
(3) performing, based on a subtractive marking unit on the end surface image, anti-resonant microstructure identification on the end surface image obtained in step (2) to obtain an image of anti-resonant microstructure units; and
(4) performing geometric parameter extraction on the image of the anti-resonant microstructure units obtained through identification in step (3) to evaluate geometric uniformity of the hollow-core microstructured optical fiber.

10. The fiber drawing detection method for the preform of the hollow-core microstructured optical fiber according to claim 9, wherein a microscope is used in step (2) for imaging the end surface.

**Fig. 1**

**Fig. 2**

**Fig. 3**

**Fig. 4**

Fig. 5

## INTERNATIONAL SEARCH REPORT

| International application No. |
|---|
| **PCT/CN2024/120312** |

### A. CLASSIFICATION OF SUBJECT MATTER

G02B6/02(2006.01)i

According to International Patent Classification (IPC) or to both national classification and IPC

### B. FIELDS SEARCHED

Minimum documentation searched (classification system followed by classification symbols)

IPC，CPC：G02B

Documentation searched other than minimum documentation to the extent that such documents are included in the fields searched

Electronic data base consulted during the international search (name of data base and, where practicable, search terms used)

CNTXT, ENTXTC: 标记, 标志, 反共振, 反谐振, 光纤, 光子晶体, 识别, 折射率

### C. DOCUMENTS CONSIDERED TO BE RELEVANT

| Category* | Citation of document, with indication, where appropriate, of the relevant passages | Relevant to claim No. |
|---|---|---|
| PX | CN 117420631 A (YANGTZE OPTICAL FIBRE AND CABLE JOINT STOCK LIMITED COMPANY) 19 January 2024 (2024-01-19) description, paragraphs 38-86, and figures 1-5 | 1-10 |
| A | EP 3766842 A1 (HERAEUS QUARZGLAS) 20 January 2021 (2021-01-20) entire document | 1-10 |
| A | CN 102449515 A (SUMITOMO ELECTRIC INDUSTRIES, LTD.) 09 May 2012 (2012-05-09) entire document | 1-10 |
| A | CN 111095059 A (UNIVERSITY OF SOUTHAMPTON) 01 May 2020 (2020-05-01) entire document | 1-10 |
| A | CN 114206792 A (HERAEUS QUARZGLAS GMBH & CO. KG) 18 March 2022 (2022-03-18) entire document | 1-10 |
| A | CN 115572058 A (HANGZHOU ADVANCED RESEARCH INSTITUTE, STATE UNIVERSITY OF SCIENCE AND TECHNOLOGY) 06 January 2023 (2023-01-06) entire document | 1-10 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2025** | **10 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/120312** |

| Patent document cited in search report | | | Publication date (day/month/year) | Patent family member(s) | | | Publication date (day/month/year) |
| --- | --- | --- | --- | --- | --- | --- | --- |
| CN | 117420631 | A | 19 January 2024 | None | | | |
| EP | 3766842 | A1 | 20 January 2021 | None | | | |
| CN | 102449515 | A | 09 May 2012 | US | 2013195411 | A1 | 01 August 2013 |
| | | | | US | 8655132 | B2 | 18 February 2014 |
| | | | | US | 2012087626 | A1 | 12 April 2012 |
| | | | | US | 8433166 | B2 | 30 April 2013 |
| | | | | DK | 2538251 | T3 | 12 October 2020 |
| | | | | EP | 2538251 | A1 | 26 December 2012 |
| | | | | EP | 2538251 | A4 | 08 November 2017 |
| | | | | EP | 2538251 | B1 | 16 September 2020 |
| | | | | JP | 2011170099 | A | 01 September 2011 |
| | | | | JP | 5267481 | B2 | 21 August 2013 |
| | | | | WO | 2011102191 | A1 | 25 August 2011 |
| CN | 111095059 | A | 01 May 2020 | US | 2020278491 | A1 | 03 September 2020 |
| | | | | US | 11215751 | B2 | 04 January 2022 |
| | | | | JP | 2020533264 | A | 19 November 2020 |
| | | | | JP | 7193530 | B2 | 20 December 2022 |
| | | | | EP | 3682273 | A1 | 22 July 2020 |
| | | | | EP | 3682273 | B1 | 05 June 2024 |
| | | | | DK | 3682273 | T3 | 26 August 2024 |
| | | | | WO | 2019053412 | A1 | 21 March 2019 |
| | | | | GB | 201714739 | D0 | 25 October 2017 |
| | | | | GB | 2566466 | A | 20 March 2019 |
| CN | 114206792 | A | 18 March 2022 | US | 2022267192 | A1 | 25 August 2022 |
| | | | | JP | 2022540682 | A | 16 September 2022 |
| | | | | JP | 7441299 | B2 | 29 February 2024 |
| | | | | WO | 2021009227 | A1 | 21 January 2021 |
| | | | | EP | 3766848 | A1 | 20 January 2021 |
| | | | | EP | 3766848 | B1 | 02 March 2022 |
| CN | 115572058 | A | 06 January 2023 | None | | | |

Form PCT/ISA/210 (patent family annex) (July 2022)

**REFERENCES CITED IN THE DESCRIPTION**

**Patent documents cited in the description**

- CN 115185034 A

- CN 113885120 A